# FASCICULE DE BREVET EUROPEEN

(11) **EP 0 612 476 B1**
(45) Date de publication et mention de la délivrance du brevet: **03.09.1997**
(21) Numéro de dépôt: 94200478.9
(22) Date de dépôt: 25.02.1994
(51) Int. Cl.: A21C 15/00

(54) **Dispositif pour la réalisation de sandwichs**
Vorrichtung zur Herstellung von Sandwichs (belegten Broten)
Device for making sandwiches

(30) Priorité: 26.02.1993 FR 9302533
(43) Date de publication de la demande: 31.08.1994
(73) Titulaire: CRITT AGRO-ALIMENTAIRE D'AUCH G.I.P. AGORA, F-32000 Auch (FR); MINOTERIE CHABANON SA, F-32600 l'Isle-Jourdain (FR)
(72) Inventeur: Barberian, Régis, F-32000 Auch (FR)
(74) Mandataire: Cabinet BARRE LAFORGUE & associés

(56) Documents cités:
- EP-A- 0 196 983
- EP-A- 0 306 404
- DE-A- 4 117 093
- US-A- 1 871 837
- US-A- 2 149 639
- US-A- 2 784 682

## Description

L'invention concerne un dispositif pour la réalisation de sandwichs au moyen d'une garniture renfermée dans un sachet souple de forme allongée.

De plus en plus de sandwichs (pains garnis) sont réalisés pour répondre aux besoins des consommateurs. La plupart de ces sandwichs sont réalisés de manière artisanale et au moment même de leur consommation pour éviter toute détérioration due au stockage.

Pour faire face à l'accroissement rapide de la demande, il a été créé des dispositifs permettant la confection automatique de sandwichs.

Le brevet EP 196 983 concerne un tel dispositif. Ce document décrit un élément tubulaire contenant une garniture à déposer dans un pain. L'élément tubulaire est enfoncé dans un pain pour l'évider. Une fois en place dans le pain, un élément formant piston (à la manière d'une seringue) extrait la garniture en dehors de l'élément tubulaire par pression, tandis que l'élément tubulaire est retiré du pain. Un tel dispositif présente l'inconvénient de contenir une garniture en contact direct avec l'intérieur de l'élément tubulaire. Pour obtenir une hygiène rigoureuse selon ce dispositif, il faudrait nettoyer complètement l'élément tubulaire entre chaque garnissage. Il en résulte une perte de temps inacceptable pour un dispositif dit automatique. Il est à noter que, selon une variante de réalisation décrite dans ce brevet (en référence aux figures 8 à 11), et visant à pallier l'inconvénient précité, l'élément tubulaire est conditionné dans une gaine retirée juste avant l'introduction de cet élément tubulaire dans le pain. Toutefois, la conception de l'élément tubulaire doté, selon cette variante, d'une fente longitudinale conduit obligatoirement à un écoulement de la garniture au travers de cette fente, lors de l'introduction dudit élément tubulaire dans le pain. De ce fait, la garniture vient souiller le pain, les mains de l'opérateur..., ces conséquences étant peu compatibles avec les conditions d'hygiène et de propreté requises lors de la réalisation d'un produit destiné à la consommation.

Le brevet FR 2.659.942 décrit, quant à lui, un emballage pour produits alimentaires destinés à garnir un pain, et un dispositif pour réaliser le transfert du contenu de cet emballage à l'intérieur d'un morceau de pain. Selon ce document, le pain est percé par un élément rigide en forme de V contenant la garniture sous sachet. Lors de ce percement, il y a création d'une boule de mie de pain qui est ensuite tassée dans le fond de l'évidement réalisé. En fin de percement, le sachet est ouvert et la garniture est extraite par retrait de l'élément rigide tout en appliquant une molette d'extraction à la sortie du pain pour maintenir la garniture à l'intérieur de ce pain.

Un premier inconvénient de ce dispositif réside dans le fait que les mécanismes de percement du pain puis d'extraction de l'élément rigide sont multiples et complexes. De plus, il n'est rien prévu pour obtenir un dépôt homogène de la garniture tout au long de l'évidement réalisé dans le pain. Par ailleurs, le moyen de percement du pain doit être changé pour chaque garniture, puisqu'il constitue également le sachet de conditionnement de cette garniture. En outre, dans ce brevet, le pain est percé à ses deux extrémités. De ce fait, lorsqu'une sauce est utilisée pour la garniture, elle a tendance à s'échapper par chacune des extrémités du pain. Un tel dispositif est donc complexe, onéreux et ne permet pas de réaliser un pain garni facile à utiliser (pas de sauce qui s'échappe !) et agréable au goût (pas de boule de mie de pain à l'intérieur !).

La présente invention vise à pallier les inconvénients des dispositifs connus et a pour objectif essentiel de fournir un dispositif permettant, de manière simple, rapide, hygiénique, automatique et peu onéreuse d'introduire dans un morceau de pain une garniture préalablement préparée et conditionnée sous sachet.

A cet effet, l'invention vise un dispositif pour la réalisation de sandwichs au moyen d'une garniture renfermée dans un sachet souple de forme allongée, caractérisé en ce qu'il comprend en combinaison :
- des moyens de maintien d'un morceau de pain à garnir, adaptés pour enserrer au moins partiellement ledit morceau de pain,
- des moyens de percement axial du morceau de pain disposés dans le prolongement des moyens de maintien et comprenant :
   . au moins une demi-coquille, dite inférieure, présentant la forme d'une goulotte de longueur inférieure à celle de sachets souples, adaptée pour loger lesdits sachets sur leur plus grande longueur de façon que ces derniers présentent des tronçons d'extrémité s'étendant dans le prolongement des extrémités correspondantes, dites aval et amont, de la demi-coquille, ladite demi-coquille présentant une extrémité aval effilée,
   . des moyens de maintien d'un sachet à l'intérieur de la demi-coquille inférieure aptes à autoriser un écoulement de la garniture renfermée dans ledit sachet, après ouverture de son tronçon d'extrémité aval,
- des moyens de déplacement des moyens de percement, comportant un chariot solidaire de l'extrémité amont de la demi-coquille inférieure et doté de moyens de fixation du tronçon d'extrémité amont d'un sachet, **l**edit chariot étant monté sur des moyens de guidage aptes à permettre de le déplacer entre une position de retrait où la demi-coquille inférieure s'étend à l'extérieur des moyens de maintien du morceau de pain, et une position avancée où ladite demi-coquille pénètre sur sa plus grande longueur à l'intérieur desdits moyens de maintien,
- des moyens d'extraction de la garniture renfermée dans un sachet logé dans la demi-coquille inférieure, après ouverture du tronçon d'extrémité aval dudit sachet, lesdits moyens d'extraction comprenant :
   . des moyens de pincement agencés pour s'étendre sensiblement au-dessus de la demi-coquille inférieure et adaptés pour maintenir pincé un tronçon intermédiaire du sachet logé dans ladite demi-coquille,
   . des moyens de déplacement des moyens de pincement comportant un chariot, dit passif, monté sur les moyens de guidage du chariot actif, adapté pour être positionné en butée contre ledit chariot actif, dans la position de retrait de ce dernier, de façon à maintenir pincé un tronçon de sachet voisin de son tronçon d'extrémité, et à être entraîné par le chariot actif lors du déplacement de ce dernier vers sa position avancée,
   . des moyens de verrouillage en translation du chariot passif dans la position avancée du chariot actif, aptes à retenir ledit chariot passif à proximité des moyens de maintien du morceau de pain lors du retour du chariot actif vers sa position de retrait.

Un tel dispositif permet de réaliser un sandwich de façon très simple et rapide. En effet, une fois un sachet positionné à l'intérieur de la demi-coquille inférieure et l'extrémité aval de ce sachet découpée, le transfert de la garniture à l'intérieur du morceau de pain est réalisé par le biais d'un simple mouvement d'aller-retour des moyens de percement.

Lors du déplacement aller, les moyens de percement pénètrent à l'intérieur du morceau de pain, le sachet souple étant maintenu à l'intérieur de la demi-coquille inférieure.

Lors du déplacement retour, les moyens de percement et le sachet maintenu dans ces derniers sont retirés du morceau de pain, la garniture s'écoulant progressivement à l'intérieur de ce morceau de pain grâce aux moyens de pincement maintenus en position avancée par le biais des moyens de verrouillage en translation du chariot passif. Il est à noter, en outre, que l'extrémité ouverte du sachet se trouvant à l'extérieur de la demi-coquille inférieure, celle-ci n'est pas souillée par la garniture et n'a donc pas à être nettoyée entre deux utilisations. En fait, seul le sachet, c'est-à-dire l'élément destiné à être jeté se trouve souillé.

Une fois le sandwich terminé, le dispositif est à nouveau rapidement opérationnel, les seules actions à mener consistant à ramener le chariot passif vers sa position arrière, retirer le sachet souple vide, et mettre en place un nouveau sachet et un nouveau morceau de pain.

Selon une autre caractéristique de l'invention, ce dispositif comprend des moyens de déclenchement des moyens de verrouillage en translation du chariot passif, aptes à être actionnés par le chariot actif lorsque ce dernier est ramené dans sa position de retrait, et des moyens de rappel associés audit chariot passif, aptes à engendrer son retour vers le chariot actif disposé dans sa position de retrait.

Le retour du chariot passif vers sa position de retrait est ainsi déclenché et réalisé de façon automatique une fois le sachet souple vide.

Selon un mode de réalisation préférentiel visant à rendre automatique ce retour du chariot passif :
- les moyens de verrouillage comprennent un cliquet articulé autour d'un axe fixe et agencé pour venir s'encliqueter sur une patte d'accrochage du chariot passif, et des moyens élastiques associés au cliquet et adaptés pour le solliciter vers sa position d'encliquetage,
- les moyens de déclenchement comprennent une tige longitudinale montée libre en translation et dotée de deux organes de butée, dits avant et arrière, disposés de façon à être sollicités par le chariot actif, lors des déplacements de ce dernier vers ses positions respectives avancée et de retrait, en vue de provoquer une translation correspondante de la tige sur une distance prédéterminée, ladite tige comprenant une extrémité aval dotée d'un organe de déclenchement apte à déverrouiller le cliquet en fin de translation vers l'arrière de cette tige.

Par ailleurs, selon une autre caractéristique de l'invention, les moyens de fixation de l'extrémité amont des sachets comprennent deux mâchoires de serrage, dites inférieure et supérieure, comportant des moyens de verrouillage aptes à les solidariser dans une position de serrage où elles coopèrent pour pincer ladite extrémité de sachet, une desdites mâchoires, inférieure, étant solidarisée sur le chariot actif de façon à s'étendre dans le prolongement de la demi-coquille inférieure.

De plus, les mâchoires sont avantageusement articulées autour d'un axe longitudinal et sont associées à des moyens de verrouillage aptes à les maintenir dans leur position de serrage.

En outre, la mâchoire supérieure porte, avantageusement, une poignée de manoeuvre apte à permettre de déplacer manuellement le chariot actif. En vue de réduire l'effort manuel à exercer pour ramener le chariot actif vers sa position de retrait, ce chariot actif est, par ailleurs, avantageusement associé à des moyens de rappel tendant à provoquer ce retour.

Selon une première variante de réalisation préférentielle concernant les moyens de maintien des sachets à l'intérieur de la demi-coquille inférieure, ces derniers comprennent une deuxième demi-coquille, dite supérieure, de forme conjuguée de celle de ladite demi-coquille inférieure, ladite demi-coquille supérieure étant adaptée pour être disposée :
- soit dans une position fermée de maintien d'un sachet, dans laquelle elle s'étend au-dessus de la demi-coquille inférieure, les moyens de pincement étant intercalés entre lesdites demi-coquilles,
- soit dans une position ouverte de remplissage où elle permet la mise en place d'un sachet à l'intérieur de la demi-coquille inférieure.

En outre, la demi-coquille supérieure comporte alors, avantageusement, une extrémité amont solidaire de la mâchoire supérieure de serrage. De ce fait, la mise en place du sachet nécessite simplement d'ouvrir la mâchoire, puis de refermer cette dernière, le sachet se trouvant automatiquement, d'une part, emprisonné entre les mâchoires au droit de son extrémité amont et, d'autre part, maintenu à l'intérieur des demi-coquilles sur sa plus grande longueur.

De plus, la demi-coquille supérieure est préférentiellement articulée autour d'un axe transversal porté par la mâchoire supérieure de serrage, ladite demi-coquille étant associée à des moyens élastiques agencés pour s'opposer à une rotation visant à écarter les demi-coquilles, dans leur position de maintien d'un sachet.

De ce fait, le sachet est pincé à faible distance de son extrémité aval entre les extrémités correspondantes des demi-coquilles lors du déplacement aller du chariot actif, sous l'effet notamment de l'effort exercé par les moyens élastiques sur la coquille supérieure. Par contre, lors du retour, la pression de la garniture entraîne le basculement de la demi-coquille supérieure et facilite l'écoulement.

Par ailleurs, deux types de moyens de pincement peuvent être avantageusement associés aux demi-coquilles.

Ainsi, selon un premier mode de réalisation avantageux, les moyens de pincement comprennent une pince dotée de deux mors, inférieur et supérieur, constitués de platines articulées autour d'un axe d'articulation, et sollicités vers une position d'ouverture de la pince par des moyens élastiques, le mors inférieur étant solidarisé sur le chariot passif au droit d'une portion de surface dudit mors voisine de l'axe d'articulation, de façon d'une part que ledit axe d'articulation s'étende longitudinalement sur un des côtés des demi-coquilles et, d'autre part, que les deux mors s'étendent transversalement entre les demi-coquilles au travers d'un espace longitudinal ménagé entre les faces de jonction desdites demi-coquilles.

Le mors supérieur de la pince est, en outre, préférentiellement surmonté d'une pièce en forme de coin conjuguée de l'extrémité effilée de la demi-coquille supérieure, ladite demi-coquille supérieure étant dotée, vers son extrémité amont, d'une face interne présentant un évidement apte à loger une portion supérieure dudit coin.

Un tel coin a pour première fonction de maintenir la pince fermée lorsque la demi-coquille supérieure est refermée sur la demi-coquille inférieure. De plus, lorsque le chariot actif est ramené vers sa position de retrait, ce coin provoque le pivotement de la demi-coquille supérieure autour de son axe d'articulation transversal facilitant l'écoulement de la garniture.

Par ailleurs, le dispositif comprend avantageusement des moyens de maintien de la pince en position fermée, dans la position avancée du chariot passif où ce dernier est bloqué en translation, lesdits moyens de maintien comprenant :
- une jambe inférieure solidaire du mors supérieur, inclinée vers l'extérieur par rapport à un plan vertical passant par l'axe d'articulation, de façon à former avec ledit mors supérieur, vu en coupe, un dièdre dont l'axe d'articulation est le sommet,
- un organe fixe anti-pivotement, constitué d'une roulette disposée de façon que l'extrémité inférieure de la jambe vienne se positionner au-dessus de ladite roulette, en contact tangentiel avec cette dernière, dans la position avancée du chariot passif.

Selon un deuxième mode de réalisation avantageux, les moyens de pincement comprennent une pièce de pincement en forme d'obus apte à maintenir un tronçon de sachet pincé entre ladite pièce et la demi-coquille supérieure dans la position fermée des demi-coquilles, ladite pièce de pincement étant portée par une platine s'étendant au travers d'une fente longitudinale ménagée dans la coquille inférieure, et solidarisée au chariot passif.

Selon une deuxième variante de réalisation préférentielle concernant les moyens de maintien des sachets à l'intérieur de la demi-coquille inférieure, ces derniers font partie intégrante desdits sachets et consistent en un ourlet externe ménagé à faible distance de l'extrémité aval de ces sachets, ledit ourlet formant une poche adaptée pour coiffer l'extrémité aval de la demi-coquille inférieure lorsqu'un sachet se trouve disposé à l'intérieur de celle-ci.

De plus, en vue de se garantir contre tout écoulement de la garniture, chaque sachet comprend avantageusement un tronçon d'extrémité aval présentant une face externe apte à adhérer sur ledit sachet, dans une position rabattue sur ce dernier, après ouverture de ladite extrémité.

Après ouverture du sachet, ce dernier peut être ainsi immédiatement obturé par rabattement de son extrémité, et ainsi éviter tout écoulement de garniture lors du déplacement aller du chariot actif.

Par contre, lors du retour du chariot actif, la pression de la garniture entraîne un dépliage de l'extrémité rabattue du sachet autorisant l'écoulement de cette garniture.

Par ailleurs, les moyens de pincement associés à la demi-coquille inférieure comprennent avantageusement une pince dotée de deux mors, inférieur et supérieur, constitués de platines articulées autour d'un axe d'articulation, et sollicités vers une position d'ouverture de la pince par des moyens élastiques, le mors inférieur étant solidarisé sur le chariot passif au droit d'une portion de surface dudit mors voisine de l'axe d'articulation, de façon d'une part que ledit axe d'articulation s'étende longitudinalement sur un des côtés de la demi-coquille inférieure et, d'autre part, que les deux mors s'étendent transversalement au-dessus de ladite demi-coquille inférieure.

D'autres caractéristiques, buts et avantages de l'invention ressortiront de la description détaillée qui suit en référence aux dessins annexés qui en représentent à titre d'exemples non limitatifs trois modes de réalisation préférentiels. Sur ces dessins qui font partie intégrante de la présente description :
- la figure 1 est une vue longitudinale latérale selon la flèche A, partiellement en coupe par un plan vertical B, d'un dispositif conforme à l'invention, dans la position de retrait des chariots,
- la figure 2 en est une vue longitudinale de dessous selon la flèche C, partiellement en coupe par un plan horizontal D, dans la position avancée des chariots,
- la figure 3 en est une coupe transversale à échelle agrandie par un plan vertical E,
- la figure 4 est une vue latérale partielle à échelle agrandie représentant les moyens de verrouillage des mâchoires,
- la figure 5 est une vue de dessus à échelle agrandie de la mâchoire supérieure,
- les figures 6a à 6e sont des schémas montrant la succession des étapes pour la réalisation d'un sandwich au moyen du dispositif illustré aux figures 1 à 5,
- la figure 7 est une coupe longitudinale schématique par un plan vertical d'une première variante de réalisation d'un dispositif conforme à l'invention, dans la position de retrait des chariots, dans laquelle un détail F, commun à cette variante et au mode de réalisation représenté aux figures 1 à 5, a été agrandi,
- la figure 8 est une coupe longitudinale schématique, par un plan vertical, d'une deuxième variante de réalisation d'un dispositif conforme à l'invention, dans la position de retrait des chariots,
- et la figure 9 est une coupe transversale schématique par un plan vertical G de cette deuxième variante.

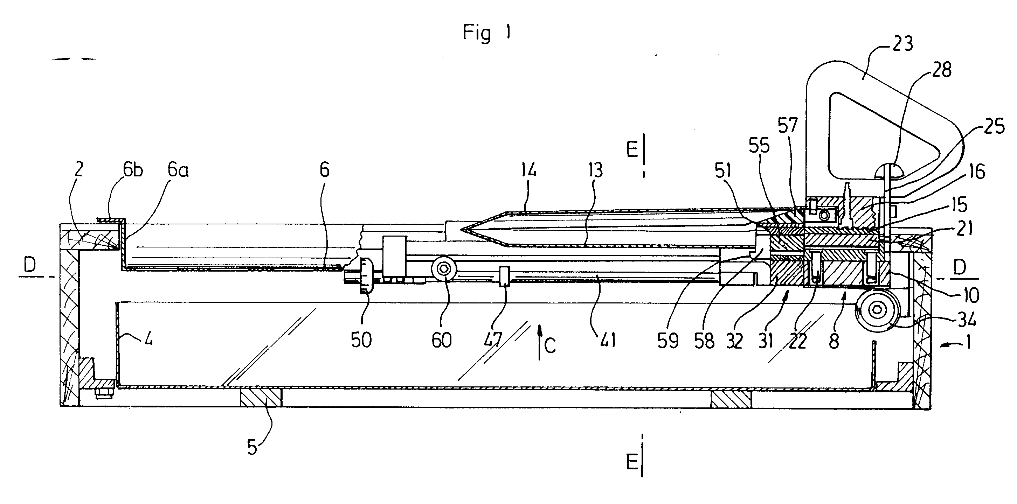

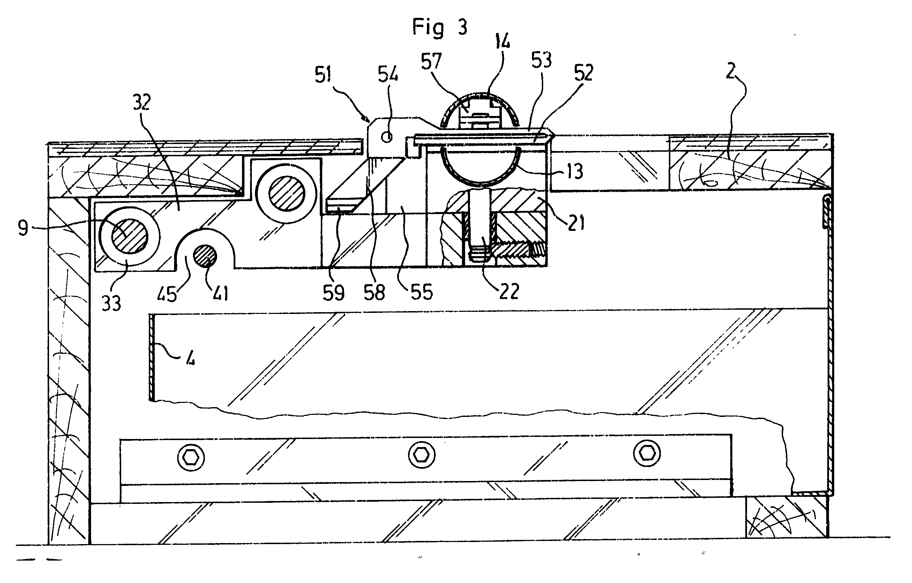

Le dispositif représenté à titre d'exemples aux figures 1 à 3, 7, 8 et 9 est destiné à la réalisation de sandwichs au moyen d'une garniture renfermée dans un sachet.

Ce dispositif comporte, en premier lieu, un bâti 1 de forme parallélépipédique rectangle, doté d'une paroi supérieure ou table 2, présentant une ouverture 3 pour la mise en place et le déplacement des différents éléments mécaniques.

A l'intérieur de ce bâti 1, se trouve logé un bac de récupération 4 reposant sur des traverses inférieures 5, accessible à partir d'une des faces frontales ouvertes dudit bâti. Ce bac de récupération 4 est destiné à réceptionner tout déchet provenant de la réalisation des sandwichs (débris de pain, gouttes de garniture, extrémité découpée des sachets, et sachet vide souillé...).

Le premier élément du dispositif consiste en une demi-coquille 6 logée dans une portion de l'ouverture 3 de forme rectangulaire conjuguée des dimensions de ladite demi-coquille.

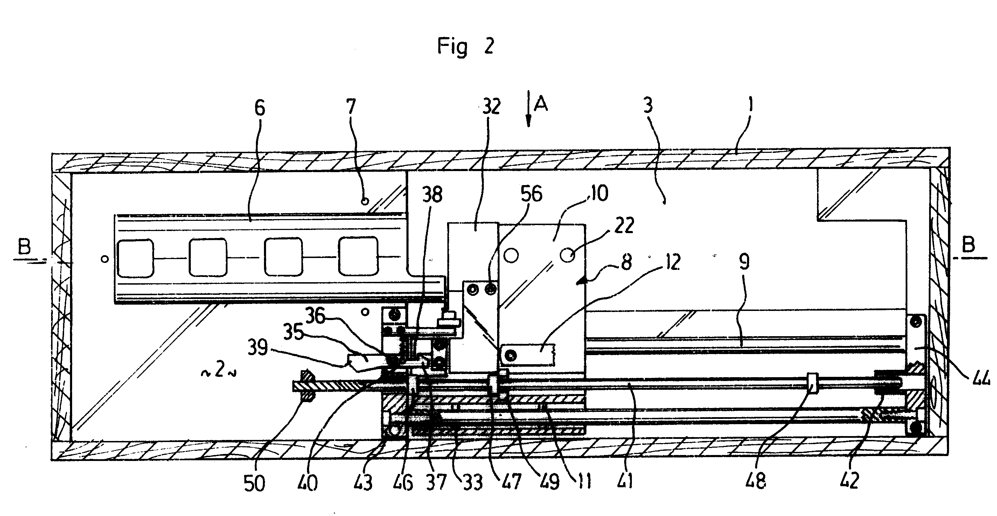

Cette demi-coquille 6 destinée à loger et à maintenir un morceau de pain présente la forme d'une goulotte semi-cylindrique obturée par une paroi d'extrémité verticale 6a de forme concave. Cette demi-coquille 6 présente, en outre, un rebord périphérique horizontal 6b d'appui sur la table 2, permettant de la fixer à ladite table au moyen de broches schématisées en 7 à la figure 2 autorisant un démontage de ladite demi-coquille par une simple traction effectuée sur celle-ci.

Enfin, cette demi-coquille 6 présente une paroi de fond ajourée de façon à permettre aux éventuels débris de pain de tomber dans le bac de récupération 4.

Le dispositif comprend, en outre, des moyens de percement d'un morceau de pain disposé dans la demi-coquille 6 et de maintien d'un sachet, portés par un chariot mobile 8, dit actif, monté coulissant le long de tiges de guidage parallèles, telles que 9, fixées sous la table 2.

En premier lieu, les tiges de guidage 9 sont au nombre de deux et sont disposées sur le côté de la portion de l'ouverture 3 de la table 2 située dans le prolongement de la demi-coquille 6. Ainsi, et comme on le comprendra mieux plus loin, ces tiges de guidage 9 et tout le mécanisme lié au déplacement du chariot 8 se trouvent déportés latéralement sur le côté de l'ouverture 3 et ne risquent pas d'être souillés par d'éventuelles chutes de garniture.

Le chariot actif 8 comporte, quant à lui, en premier lieu, un bloc porteur 10 doté de deux paliers longitudinaux tels que 11, aptes à loger chacun une tige de guidage 9, ledit bloc porteur s'étendant transversalement par rapport auxdites tiges de guidage de façon à posséder une portion de surface disposée à l'aplomb de l'ouverture 3.

Ce bloc porteur 10 est, en outre, associé à des moyens de rappel tendant à le ramener vers une position, dite de retrait, où il se trouve au niveau de l'extrémité de l'ouverture 3 opposée à la demi-coquille 6.

Ces moyens de rappel consistent en une lame flexible 12 enroulée en spirale autour d'un axe (non représenté) solidarisée sous la table 2 à proximité de l'extrémité précitée de l'ouverture 3, l'extrémité libre de ladite lame 12 étant solidarisée sous le bloc porteur 10.

Les moyens de percement des morceaux de pain et de maintien d'un sachet sont destinés à être montés sur la portion du bloc porteur 10 située à l'aplomb de l'ouverture 3. Ils consistent en deux demi-coquilles inférieure 13 et supérieure 14, aptes à loger un sachet dans leur position fermée, dotées d'extrémités aval effilées, et d'extrémités amont solidaires de mâchoires respectivement inférieure 15 et supérieure 16 disposées dans le prolongement desdites demi-coquilles et articulées autour d'un axe longitudinal 17.

En premier lieu, les demi-coquilles 13, 14 sont agencées pour pénétrer axialement dans un morceau de pain disposé dans la demi-coquille 6. Ces demi-coquilles 13, 14 adaptées pour former un fourreau apte à loger un sachet, dans leur position fermée, présentent une longueur inférieure à celle desdits sachets, de façon que ces derniers présentent des tronçons d'extrémité s'étendant dans le prolongement des extrémités aval et amont desdites coquilles : le tronçon d'extrémité aval des sachets étant destiné à être ouvert en vue de l'écoulement de la garniture, et rabattu dans un premier temps sous la demi-coquille inférieure 13 lors du percement du morceau de pain, le tronçon amont étant destiné à être maintenu serré entre les mâchoires 15, 16.

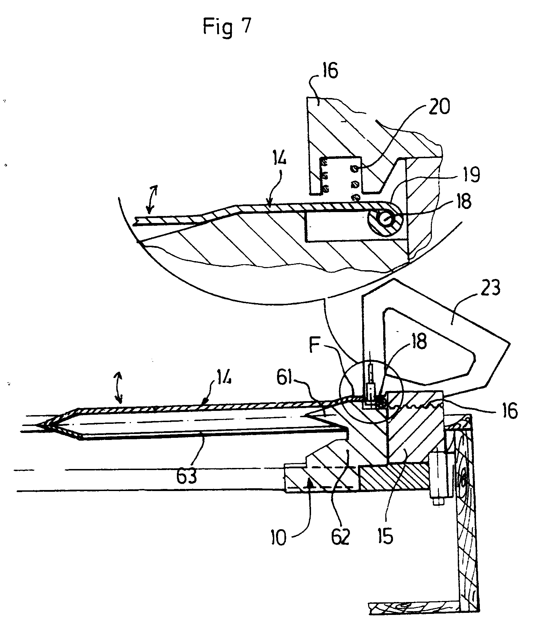

En outre, la demi-coquille inférieure 13 est solidarisée de façon rigide à la mâchoire inférieure 15, tandis que la demi-coquille supérieure 14 est articulée autour d'un axe transversal 18 porté par la mâchoire supérieure 16, tel que représenté sur le détail F de la figure 7.

A cet effet, l'extrémité amont de la demi-coquille supérieure 14 présente la forme d'un manchon 19 logeant l'axe transversal 18. De plus, un ressort 20 est disposé de façon à venir en appui sur la demi-coquille supérieure 14 de façon à s'opposer à une rotation vers le haut de ladite demi-coquille.

Par ailleurs, la mâchoire inférieure 15 est solidarisée sur une pièce d'interface 21, elle-même solidarisée sur le bloc porteur 10 au moyen de broches 22 autorisant le démontage du système de mâchoires et donc des demi-coquilles 13, 14.

La mâchoire supérieure 16 porte, quant à elle, une poignée de manoeuvre 23 permettant, d'une part, de déplacer le chariot actif 8 le long des tiges de guidage 9 et, d'autre part, de démonter l'ensemble mâchoires 15, 16/demi-coquilles 13, 14 par une simple traction vers le haut exercée sur ladite poignée.

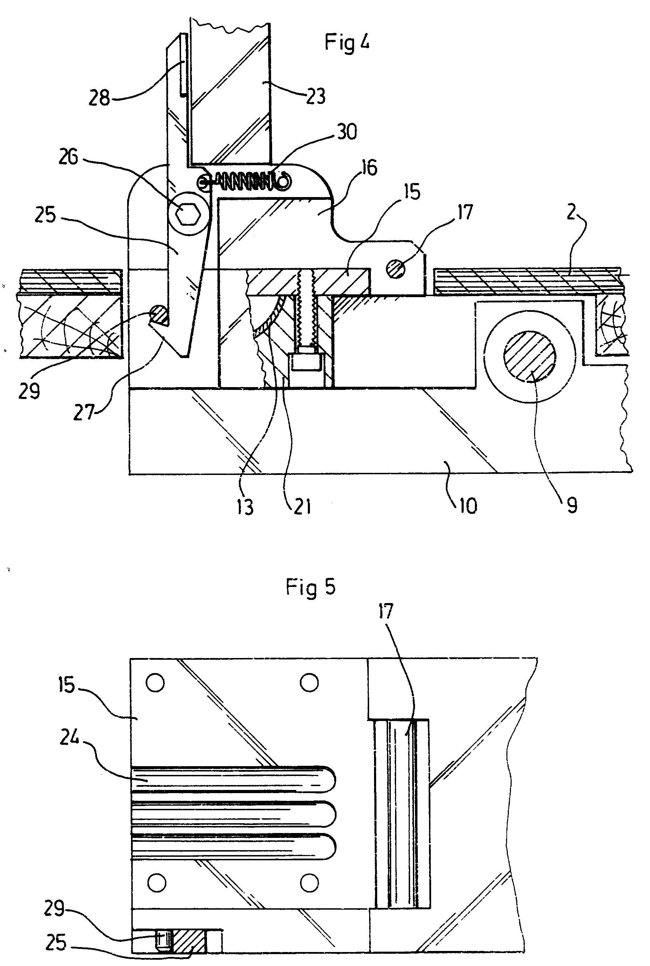

De plus, tel que représenté à la figure 5, les mâchoires 15, 16 présentent des faces de serrage striées d'une succession de cannelures et de nervures transversales 24 adaptées pour venir s'imbriquer les unes dans les autres dans la position de serrage.

Le système de mâchoires 15, 16 comporte, enfin, des moyens de verrouillage desdites mâchoires dans leur position de serrage.

Ces moyens de verrouillage consistent en un loquet monté latéralement sur le système de mâchoires 15, 16, à l'opposé de l'axe d'articulation 17. Ce loquet comporte un cliquet 25 monté pivotant autour d'un axe horizontal médian 26 solidaire de la mâchoire supérieure, ledit cliquet comportant une extrémité inférieure en forme de crochet 27 et une extrémité supérieure formant un poussoir 28.

Ce loquet comporte, en outre, un pion horizontal 29 solidaire de la mâchoire inférieure 15 et agencé pour coopérer avec le crochet 27 en vue de maintenir fermées les mâchoires 15, 16, et un ressort 30 disposé entre le cliquet 25 et la mâchoire supérieure et destiné à solliciter ledit cliquet vers sa position de verrouillage.

Un tel loquet verrouille donc automatiquement le système de mâchoires 15, 16 lors de la fermeture de ce dernier, le déverrouillage étant réalisé par pivotement du cliquet 25 obtenu en exerçant une pression sur le poussoir 28.

Le dispositif comporte, en outre, un deuxième chariot, dit passif, 31 monté coulissant le long des tiges de guidage 9 et portant des moyens de pincement du sachet logé dans les demi-coquilles 13, 14, ledit chariot étant adapté pour venir en butée contre le chariot actif 8, dans la position de retrait de ce dernier.

Ce chariot passif 31 comporte un bloc porteur 32 doté de deux paliers longitudinaux tels que 33 aptes à loger chacun une tige de guidage 9, ce bloc porteur s'étendant transversalement par rapport auxdites tiges de guidage de façon à posséder une portion de surface s'étendant à l'aplomb de l'ouverture 3.

Ce bloc porteur 32 est associé à des moyens de rappel constitués d'une lame 34 enroulée en spirale identique à la lame 12, disposée de façon à ramener le chariot passif 31 vers sa position de retrait.

Le chariot passif 31 est, en outre, associé à des moyens de verrouillage en translation aptes à le retenir dans une position avancée où il se trouve à proximité de la demi-coquille 6, et à des moyens de déclenchement de ces moyens de verrouillage aptes à permettre le retour de ce chariot passif 31.

En premier lieu, les moyens de verrouillage comportent un système de loquet comportant un cliquet 35 monté pivotant autour d'un axe vertical médian 36 fixé sous la table 2, ledit cliquet comportant une extrémité en forme de crochet 37 apte à coopérer avec une patte d'accrochage 38 s'étendant frontalement à l'avant du bloc porteur 32, et une extrémité opposée formant une rampe verticale inclinée 39.

Le système de loquet comporte, enfin, un ressort 40 disposé entre le cliquet 35 et la table 2 et agencé pour solliciter ledit cliquet vers sa position de verrouillage du chariot passif 31.

Les moyens de déclenchement comprennent une tige longitudinale 41 montée libre en translation à l'intérieur de manchons tels que 42 ménagés dans les pièces support 43, 44 des extrémités des tiges de guidage 9, ladite tige étant logée, en outre, à l'intérieur de gorges telles que 45 ménagées en sous-face des chariots 8, 31.

Cette tige 41 comporte, en premier lieu, trois organes de butée 46, 47, 48 répartis le long de ladite tige :
- un premier organe de butée 46 disposé de façon à venir en butée contre la pièce support 43 de l'extrémité aval des tiges de guidage 9, de façon à limiter la translation vers l'avant de ladite tige,
- et deux organes de butée dits avant 47 et arrière 48, agencés pour être sollicités par le chariot actif 8 muni à cet effet d'un arceau de contact 49 logé dans la gorge 45, respectivement lors des déplacements de ce chariot vers sa position avancée et sa position de retrait, en vue de provoquer une translation soit vers l'avant soit vers l'arrière de la tige 41 sur une distance prédéterminée.

La tige de déclenchement 41 comporte enfin une pièce de déclenchement 50 disposée au niveau de son extrémité aval et consistant en un disque comportant une face frontale dotée d'un chanfrein périphérique, agencé pour coopérer avec la rampe inclinée 39 du cliquet 35, et provoquer une rotation de ce dernier vers sa position de déverrouillage, lorsque le chariot actif 8 parvient dans sa position de retrait.

Les moyens de pincement portés par le chariot passif comprennent, quant à eux, une pince 51 dotée de deux mors inférieur 52 et supérieur 53 constitués de deux platines articulées autour d'un axe d'articulation longitudinal 54, et sollicités vers une position d'ouverture de la pince par un ressort (non représenté).

Le mors inférieur 52 de cette pince 51 est solidarisé sur une pièce d'interface 55 au niveau d'une portion dudit mors voisine de l'axe d'articulation 54, de façon d'une part, que ledit axe d'articulation s'étende sur un des côtés des demi-coquilles 13, 14 et, d'autre part, que les deux mors 52, 53 s'étendent transversalement entre lesdites demi-coquilles, au travers d'un espace longitudinal ménagé entre les faces de jonction de ces dernières.

La pièce d'interface 55 est, elle-même, solidarisée sur le bloc porteur 32 au moyen de broches (schématisées en 56 à la figure 2) autorisant le démontage de la pince 51 par le biais d'une traction exercée sur le mors supérieur 53.

En outre, le mors supérieur 53 de la pince 51 est surmonté d'une pièce en forme de coin 57 de forme conjuguée de l'extrémité effilée de la demi-coquille supérieure 14, ladite demi-coquille supérieure étant dotée au niveau de son extrémité amont d'un évidement apte à loger la portion supérieure de ladite pièce.

Enfin, la pince 51 est dotée d'une jambe 58, solidaire du mors supérieur 53, s'étendant vers le bas et inclinée vers l'extérieur de ladite pince par rapport à l'axe d'articulation 54. Cette jambe 58, disposée vers l'extrémité aval du mors supérieur 53 comporte, en outre, un talon inférieur 59 doté d'une face inférieure chanfreinée.

Une telle jambe 58 est adaptée pour venir en contact tangentiel avec la génératrice supérieure d'une roulette 60, dans la position avancée du chariot passif 31, formant avec cette roulette 60 une butée en rotation apte à interdire l'ouverture de la pince 51.

Le fonctionnement du dispositif décrit ci-dessus est explicité en référence aux figures 6a à 6e.

En premier lieu, un morceau de pain est disposé dans la demi-coquille 6, et un sachet est installé dans la demi-coquille inférieure 13, la poignée de manoeuvre 23 étant rabattue sur le côté, de façon que les extrémités dudit sachet s'étendent dans le prolongement de chacune des extrémités de ladite demi-coquille.

La poignée de manoeuvre 23 est alors redressée entraînant la fermeture des mâchoires 15, 16 et de la pince 51 sollicitée par la demi-coquille supérieure 14 par le biais de la pièce 57.

Dans cette position, le sachet est parfaitement maintenu bloqué entre les mâchoires 15, 16 verrouillées par le cliquet 26, le tronçon dudit sachet situé directement en aval desdites mâchoires étant pincé entre les mors 52, 53 (figure 6a). De plus, le sachet est maintenu pincé, à faible distance de son extrémité aval, entre les extrémités effilées des demi-coquilles 13, 14.

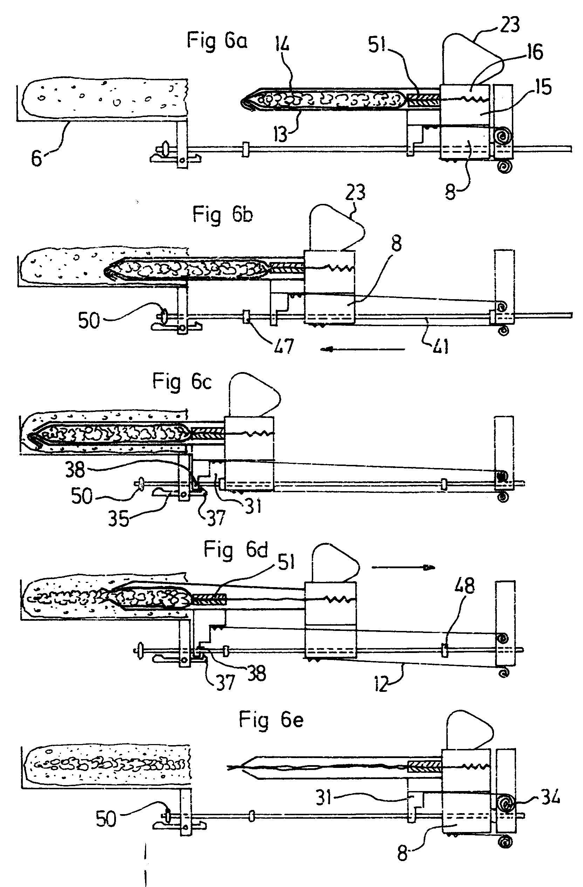

Après avoir ouvert l'extrémité aval du sachet, le chariot actif 8 est déplacé vers l'avant, entraînant la pénétration des demi-coquilles 13, 14 à l'intérieur du morceau de pain (figure 6b) et ce, jusqu'à ce que la patte d'accrochage 38 du chariot passif 31 vienne se verrouiller sur le cliquet 35 (figure 6c).

Lors de ce déplacement, en outre, la pièce de contact 49 du chariot actif 8 rencontre l'organe de butée avant 47 de la tige de déclenchement 41 entraînant un déplacement vers l'avant de cette dernière apte à positionner la pièce de déclenchement 50 en aval du cliquet 35.

Le chariot actif 8 est ensuite ramené vers sa position de retrait, ce retour étant facilité par la lame ressort 12. Au cours de ce retour, en outre, le chariot passif 31 et par conséquent la pince 51 sont maintenus en position avancée par les moyens de verrouillage associés 37, 38. De ce fait, la garniture est amenée à se répandre progressivement dans le morceau de pain au fur et à mesure du déplacement du chariot actif 8 (figure 6d).

Il est à noter, en outre, qu'au début du déplacement vers l'arrière du chariot actif 8, la pièce en forme de coin 57 provoque une rotation vers le haut de la demi-coquille supérieure 14, entraînant un écartement relatif des demi-coquilles 13, 14, favorable à l'écoulement de la garniture.

En outre, lorsque le chariot actif 8 parvient à proximité de sa position de retrait, la pièce de contact 49 rencontre la butée arrière 48 de la tige de déclenchement 41 entraînant un déplacement vers l'arrière de cette dernière apte à amener la pièce de déclenchement 50 au contact de la rampe 39 du cliquet 35, et à déverrouiller ce dernier.

Le chariot passif 31 sollicité par la lame ressort 34 revient alors automatiquement en arrière jusqu'à venir buter contre le chariot actif 8 (figure 6e).

La figure 7 représente une variante de ce dispositif selon laquelle la pince 51 est remplacée par une pièce de pincement 61 en forme d'obus agencée pour se loger à l'intérieur des demi-coquilles 13, 14, dans la position fermée de ces dernières de façon à maintenir une portion de sachet pincée entre ladite pièce et la demi-coquille supérieure.

Cette pièce de pincement 61 est, en outre, solidarisée au chariot passif par l'intermédiaire d'une platine 62 verticale s'étendant au travers d'une fente longitudinale 63 ménagée dans la demi-coquille inférieure 13.

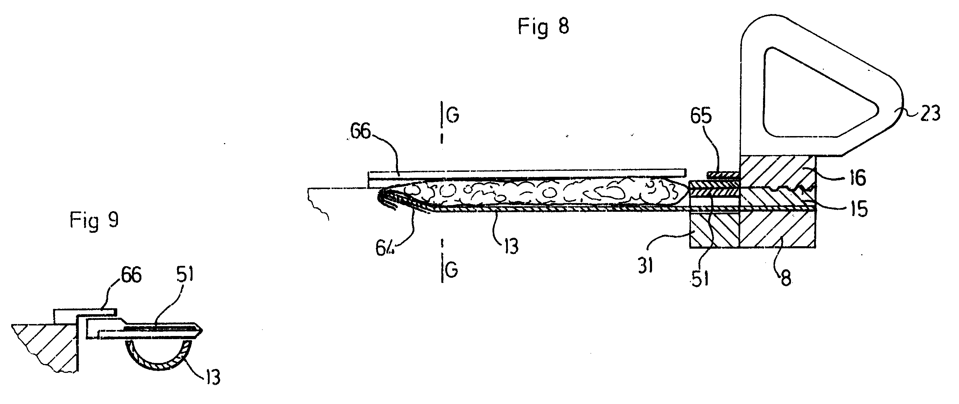

Les figures 8 et 9 représentent une deuxième variante selon laquelle les moyens de pincement sont constitués de la pince 51, mais ne comportant pas de demi-coquille supérieure.

Selon cette variante, les sachets comportent un ourlet externe 64 ménagé à faible distance de leur extrémité aval, ledit ourlet formant une poche adaptée pour coiffer l'extrémité aval de la demi-coquille inférieure 13 lorsqu'un sachet se trouve disposé à l'intérieur de celle-ci.

De plus, dans ce cas, l'extrémité aval de chaque sachet présente avantageusement une face externe apte à adhérer sur ledit sachet dans une position rabattue sur ce dernier, après ouverture de ladite extrémité.

A cet effet, l'extrémité des sachets peut par exemple présenter une structure formée de trois épaisseurs : une première épaisseur interne consistant en un film plastique, une deuxième épaisseur consistant en un adhésif double face, et une troisième épaisseur, externe, consistant en un film détachable.

En outre, selon cette variante, la mâchoire supérieure 16 est prolongée axialement d'un doigt horizontal 65 de fermeture de la pince 51. De plus, l'ouverture 3 est bordée d'une glissière comportant une aile supérieure horizontale 66 apte à maintenir la pince 51 fermée, lorsque le chariot actif 8 est séparé de cette dernière, cette glissière étant interrompue, de façon à permettre uniquement l'ouverture de la pince dans sa position de retrait, après ouverture des mâchoires 15, 16.

## Revendications

1. Dispositif pour la réalisation de sandwichs au moyen d'une garniture renfermée dans un sachet souple de forme allongée, caractérisé en ce qu'il comprend en combinaison :
- des moyens (6) de maintien d'un morceau de pain à garnir, adaptés pour enserrer au moins partiellement ledit morceau de pain,
- des moyens de percement axial du morceau de pain disposés dans le prolongement des moyens de maintien (6) et comprenant :
. au moins une demi-coquille (13), dite inférieure, présentant la forme d'une goulotte de longueur inférieure à celle de sachets souples, adaptée pour loger lesdits sachets sur leur plus grande longueur de façon que ces derniers présentent des tronçons d'extrémité s'étendant dans le prolongement des extrémités correspondantes, dites aval et amont, de la demi-coquille (13), ladite demi-coquille présentant une extrémité aval effilée,
. des moyens (14 ; 64) de maintien d'un sachet à l'intérieur de la demi-coquille inférieure (13) aptes à autoriser un écoulement de la garniture renfermée dans ledit sachet, après ouverture de son tronçon d'extrémité aval,
- des moyens de déplacement des moyens de percement (13, 14 ; 13, 64), comportant un chariot (8) solidaire de l'extrémité amont de la demi-coquille inférieure (13) et doté de moyens (15, 16) de fixation du tronçon d'extrémité amont d'un sachet, ledit chariot étant monté sur des moyens de guidage (9) aptes à permettre de le déplacer entre une position de retrait où la demi-coquille inférieure (13) s'étend à l'extérieur des moyens (6) de maintien du morceau de pain, et une position avancée où ladite demi-coquille pénètre sur sa plus grande longueur à l'intérieur desdits moyens de maintien,
- des moyens d'extraction de la garniture renfermée dans un sachet logé dans la demi-coquille inférieure (13), après ouverture du tronçon d'extrémité aval dudit sachet, lesdits moyens d'extraction comprenant :
. des moyens de pincement (51 ; 61) agencés pour s'étendre sensiblement au-dessus de la demi-coquille inférieure (13) et adaptés pour maintenir pincé un tronçon intermédiaire du sachet logé dans ladite demi-coquille,
. des moyens (31) de déplacement des moyens de pincement (51 ; 61) comportant un chariot (31), dit passif, monté sur les moyens de guidage (9) du chariot actif (8), adapté pour être positionné en butée contre ledit chariot actif, dans la position de retrait de ce dernier, de façon à maintenir pincé un tronçon de sachet voisin de son tronçon d'extrémité, et à être entraîné par le chariot actif (8) lors du déplacement de ce dernier vers sa position avancée,
. des moyens (35, 38) de verrouillage en translation du chariot passif (31) dans la position avancée du chariot actif (8), aptes à retenir ledit chariot passif à proximité des moyens (6) de maintien du morceau de pain lors du retour du chariot actif vers sa position de retrait.

2. Dispositif selon la revendication 1, caractérisé en ce qu'il comprend des moyens (41, 47, 48, 50) de déclenchement des moyens (35, 38) de verrouillage en translation du chariot passif (31), aptes à être actionnés par le chariot actif (8) lorsque ce dernier est ramené dans sa position de retrait, et des moyens de rappel (34) associés audit chariot passif, aptes à engendrer son retour vers le chariot actif (8) disposé dans sa position de retrait.

3. Dispositif selon la revendication 2, caractérisé en ce que :
- les moyens de verrouillage comprennent un cliquet (35) articulé autour d'un axe fixe (36) et agencé pour venir s'encliqueter sur une patte d'accrochage (38) du chariot passif (31), et des moyens élastiques (40) associés au cliquet (35) et adaptés pour le solliciter vers sa position d'encliquetage,
- les moyens de déclenchement comprennent une tige longitudinale (41) montée libre en translation et dotée de deux organes de butée (47, 48), dits avant et arrière, disposés de façon à être sollicités par le chariot actif (8), lors des déplacements de ce dernier vers ses positions respectives avancée et de retrait, en vue de provoquer une translation correspondante de la tige (41) sur une distance prédéterminée, ladite tige comprenant une extrémité aval dotée d'un organe de déclenchement (50) apte à déverrouiller le cliquet (35) en fin de translation vers l'arrière de cette tige.

4. Dispositif selon la revendication 3, caractérisé en ce que les moyens de guidage des chariots actif (8) et passif (31) comprennent deux tiges de guidage longitudinales (9) parallèles à la tige de déclenchement (41), lesdites tiges de guidage et de déclenchement s'étendant au travers de paliers (11, 33, 45) ménagés dans les chariots actif et passif.

5. Dispositif selon l'une des revendications 1 à 4, caractérisé en ce que les moyens de fixation de l'extrémité amont des sachets comprennent deux mâchoires de serrage (15, 16), dites inférieure et supérieure, comportant des moyens de verrouillage (25-30) aptes à les solidariser dans une position de serrage où elles coopèrent pour pincer ladite extrémité de sachet, une desdites mâchoires (15), inférieure, étant solidarisée sur le chariot actif (8) de façon à s'étendre dans le prolongement de la demi-coquille inférieure (13).

6. Dispositif selon la revendication 5, caractérisé en ce que les deux mâchoires (15, 16) sont articulées autour d'un axe longitudinal (17), et sont associées à des moyens de verrouillage (25-30) aptes à les maintenir dans leur position de serrage.

7. Dispositif selon la revendication 6, caractérisé en ce que la mâchoire supérieure (16) porte une poignée de manoeuvre (23) apte à permettre de déplacer manuellement le chariot actif (8).

8. Dispositif selon la revendication 7, caractérisé en ce qu'il comprend des moyens de rappel (12) associés au chariot actif (8) et aptes à engendrer son retour vers sa position de retrait.

9. Dispositif selon l'une des revendications 5 à 8, caractérisé en ce que les deux mâchoires (15, 16) comprennent des faces de serrage présentant une succession de cannelures et de nervures (24) adaptées pour venir s'imbriquer les unes dans les autres dans la position de serrage.

10. Dispositif selon l'une des revendications 6 à 8, caractérisé en ce que la mâchoire inférieure (15) est fixée sur le chariot actif (8) au moyen de broches (22) aptes à permettre le démontage des mâchoires, par une traction exercée sur la mâchoire supérieure (16).

11. Dispositif selon l'une des revendications précédentes, caractérisé en ce que les moyens de maintien du morceau de pain sont constitués d'une demi-coquille (6) présentant la forme d'une goulotte adaptée pour loger ledit morceau de pain, ladite goulotte étant obturée par une paroi d'extrémité verticale (6a) de forme concave, au niveau de son extrémité opposée aux moyens de percement (13, 14 ; 13, 64).

12. Dispositif selon l'une des revendications précédentes, caractérisé en ce que les moyens de maintien des sachets à l'intérieur de la demi-coquille inférieure (13) comprennent une deuxième demi-coquille (14), dite supérieure, de forme conjuguée de celle de ladite demi-coquille inférieure, ladite demi-coquille supérieure étant adaptée pour être disposée :
- soit dans une position fermée de maintien d'un sachet, dans laquelle elle s'étend au-dessus de la demi-coquille inférieure (13), les moyens de pincement (51 ; 61) étant intercalés entre lesdites demi-coquilles,
- soit dans une position ouverte de remplissage où elle permet la mise en place d'un sachet à l'intérieur de la demi-coquille inférieure (13).

13. Dispositif selon l'une des revendications 5 à 10 et la revendication 12 prises ensemble, caractérisé en ce que la demi-coquille supérieure (14) comporte une extrémité amont solidaire de la mâchoire supérieure de serrage (16).

14. Dispositif selon la revendication 13, caractérisé en ce que la demi-coquille supérieure (14) est articulée autour d'un axe transversal (18) porté par la mâchoire supérieure de serrage (16), ladite demi-coquille étant associée à des moyens élastiques (20) agencés pour s'opposer à une rotation visant à écarter les demi-coquilles (13, 14), dans leur position de maintien d'un sachet.

15. Dispositif selon l'une des revendications 12 à 14, caractérisé en ce que les moyens de pincement comprennent une pince (51) dotée de deux mors (52, 53), inférieur et supérieur, constitués de platines articulées autour d'un axe d'articulation (54), et sollicités vers une position d'ouverture de la pince par des moyens élastiques, le mors inférieur (52) étant solidarisé sur le chariot passif (31) au droit d'une portion de surface dudit mors voisine de l'axe d'articulation (54), de façon d'une part que ledit axe d'articulation s'étende longitudinalement sur un des côtés des demi-coquilles (13, 14) et, d'autre part, que les deux mors (52, 53) s'étendent transversalement entre lesdites demi-coquilles au travers d'un espace longitudinal ménagé entre les faces de jonction de ces dernières.

16. Dispositif selon les revendications 14 et 15 prises ensemble, caractérisé en ce que le mors supérieur (53) de la pince (51) est surmonté d'une pièce (57) en forme de coin conjuguée de l'extrémité effilée de la demi-coquille supérieure (14), ladite demi-coquille supérieure étant dotée, vers son extrémité amont, d'une face interne présentant un évidement apte à loger une portion supérieure dudit coin.

17. Dispositif selon l'une des revendications 15 ou 16, caractérisé en ce qu'il comprend des moyens de maintien de la pince (51) en position fermée, dans la position avancée du chariot passif (31) où ce dernier est bloqué en translation, lesdits moyens de maintien comprenant :
- une jambe inférieure (58) solidaire du mors supérieur (53), inclinée vers l'extérieur par rapport à un plan vertical passant par l'axe d'articulation (54), de façon à former avec ledit mors supérieur, vu en coupe, un dièdre dont l'axe d'articulation (54) est le sommet,
- un organe fixe (60) anti-pivotement, constitué d'une roulette disposée de façon que l'extrémité inférieure de la jambe (58) vienne se positionner au-dessus de ladite roulette, en contact tangentiel avec cette dernière, dans la position avancée du chariot passif (31).

18. Dispositif selon l'une des revendications 15 à 17, caractérisé en ce que le mors inférieur (52) de la pince (51) est fixé sur le chariot passif (31) au moyen de broches (56) aptes à permettre le démontage de ladite pince par une traction exercée sur le mors supérieur (53).

19. Dispositif selon l'une des revendications 15 à 18, caractérisé en ce que les moyens de guidage des chariots passif (31) et actif (8) sont décalés latéralement par rapport au plan vertical de déplacement des moyens de percement (13, 14).

20. Dispositif selon l'une des revendications 12 à 14, caractérisé en ce que les moyens de pincement comprennent une pièce de pincement (61) en forme d'obus apte à maintenir un tronçon de sachet pincé entre ladite pièce et la demi-coquille supérieure (14) dans la position fermée des demi-coquilles, ladite pièce de pincement étant portée par une platine (62) s'étendant au travers d'une fente longitudinale (63) ménagée dans la coquille inférieure (13), et solidarisée au chariot passif (31).

21. Dispositif selon l'une des revendications 1 à 11, caractérisé en ce que les moyens de maintien des sachets à l'intérieur de la demi-coquille inférieure (13) font partie intégrante desdits sachets et consistent en un ourlet externe (64) ménagé à faible distance de l'extrémité aval de ces sachets, ledit ourlet formant une poche adaptée pour coiffer l'extrémité aval de la demi-coquille inférieure (13) lorsqu'un sachet se trouve disposé à l'intérieur de celle-ci.

22. Dispositif selon la revendication 21, caractérisé en ce que chaque sachet comporte un tronçon d'extrémité aval présentant une face externe apte à adhérer sur ledit sachet, dans une position rabattue sur ce dernier, après ouverture de ladite extrémité.

23. Dispositif selon l'une des revendications 21 ou 22, caractérisé en ce que les moyens de pincement comprennent une pince (51) dotée de deux mors (52, 53), inférieur et supérieur, constitués de platines articulées autour d'un axe d'articulation (54), et sollicités vers une position d'ouverture de la pince (51) par des moyens élastiques, le mors inférieur (52) étant solidarisé sur le chariot passif (31) au droit d'une portion de surface dudit mors voisine de l'axe d'articulation (54), de façon d'une part que ledit axe d'articulation s'étende longitudinalement sur un des côtés de la demi-coquille inférieure (13) et, d'autre part, que les deux mors (52, 53) s'étendent transversalement au-dessus de ladite demi-coquille inférieure.

## Claims

1. A device for preparing sandwiches by means of a filling enclosed in a flexible sachet with an elongated shape, characterized in that it comprises in combination:
- means (6) for holding a piece of bread to be filled, adapted to enclose said piece of bread at least partially,
- means for piercing the piece of bread axially, located in the prolongation of the holding means (6) and comprising:
. at least one so-called lower half-casing (13) having the shape of a trough with a length shorter than that of the flexible sachets, adapted to accomodate said sachets along the greatest portion of their length, so that end portions of said sachets extend in the prolongation of the so-called forward and rearward corresponding end portions of the half-casing (13), said half-casing having a tapered forward end,
. means (14; 64) for holding a sachet inside the lower half-casing (13), adapted to allow a flow of the filling enclosed in said sachet after its forward portion has been opened,
- means for moving the piercing means (13, 14; 13, 64) comprising a carriage (8) rigidly fixed on the rearward end of the lower half-casing (13) and provided with means (15, 16) for fixing the rearward end portion of a sachet, said carriage being mounted on guiding means (9) adapted to allow it to be moved between a retracted position, in which the lower half-casing (13) extends outside the means (6) for holding the piece of bread, and an advanced position in which said half-casing enters inside said holding means along its greatest length,
- means for extracting the filling enclosed in a sachet which is accomodated in the lower half-casing (13), after the forward end portion of said sachet has been opened, said extraction means comprising:
. pressing means (51; 61) arranged so as to extend substantially above the lower half-casing (13) and adapted to press an intermediate portion of the sachet accomodated in said half-casing,
. means (31) for moving the pressing means (51; 61), comprising a so-called passive carriage (31), mounted on the guiding means (9) of the active carriage (8), adapted to be positioned in abutment against said active carriage, in the retracted position of the latter, so as to press a portion of the sachet adjacent to its end portion, and to be driven by the active carriage (8) during the movement of the latter towards its advanced position,
. means (35, 38) for blocking the translation of the passive carriage (31) in the advanced position of the active carriage (8), adapted to maintain said passive carriage in a position adjacent to the means (6) for holding the piece of bread during the return of the active carriage to its retracted position.

2. A device according to claim 1, characterized in that it comprises means (41, 47, 48, 50) of releasing the means (35, 38) for blocking the translation of the passive carriage (31), adapted to be actuated by the active carriage (8) when said active carriage is returned into the retracted position, and return means (34) associated with said passive carriage, adapted to cause the return thereof towards the active carriage (8) located in the retracted position.

3. A device according to claim 2, characterized in that
- the blocking means comprise a detent (35) articulated around a fixed shaft (36) and arranged such as to engage a hooking lug (38) on the passive carriage (31), and resilient means (40) associated with the detent (35) and adapted to bias said detent towards the engaged position,
- the releasing means comprise a longitudinal rod (41) mounted so as to be allowed to be moved freely in translation and provided with a pair of so-called front and rear abutment members (47, 48) arranged so as to be biased by the active carriage (8) during the movements of the latter towards its respective advanced and retracted positions, in order to cause a corresponding translation of the rod (41) over a predetermined distance, said rod comprising a forward end provided with a releasing element (50) adapted to unlock said detent (35) at the end of the rearward translation of said rod.

4. A device according to claim 3, characterized in that the guiding means of the active (8) and passive (31) carriages comprise a pair of longitudinal guiding rods (9) parallel to the releasing rod (41), said guiding and releasing rods extending through bearings (11, 33, 45) in the active and passive carriages.

5. A device according to one of claims 1 to 4, characterized in that the means for fixing the rearward end portion of the sachets comprise a pair of so-called lower and upper clamping jaws (15, 16), comprising locking means (25-30) adapted to join them together in a clamping position in which they co-operate to press said end portion of the sachet, one of said jaws, namely the lower jaw (15), being rigidly fixed on the active carriage (8) so that it extends in the prolongation of the lower half-casing (13).

6. A device according to claim 5, characterized in that the pair of jaws (15, 16) are articulated around a longitudinal shaft (17) and are associated with locking means (25-30) adapted to maintain them in their clamping position.

7. A device according to claim 6, characterized in that the upper jaw (16) carries a manipulating handle (23) adapted to allow the active carriage (8) to be moved with the hand.

8. A device according to claim 7, characterized in that it comprises return means (12) associated with the active carriage (8) and adapted to cause its return to its retracted position.

9. A device according to one of claims 5 to 8, characterized in that the pair of jaws (15, 16) comprise clamping faces provided with successive grooves and ribs (24) adapted to nest inside one another in the clamping position.

10. A device according to one of claims 6 to 8, characterized in that the lower jaw (15) is fixed on the active carriage (8) by means of spindles (22) adapted to allow a dismounting of the jaws by means of a tractive force applied on the upper jaw (16).

11. A device according to one of the preceding claims, characterized in that the means for holding the piece of bread consist of a half-casing (6) having the shape of a trough adapted to accomodate said piece of bread, said trough being closed by a vertical end wall (6a) having a concave shape, at its end opposite to the piercing means (13, 14; 13, 64).

12. A device according to one of the preceding claims, characterized in that the means for holding sachets inside the lower half-casing (13) comprise a second so-called upper half-casing (14), the shape of which is conjugate to that of said lower half-casing, said upper half-casing being adapted to be arranged:
- either in a closed, sachet holding, position in which it extends above the lower half-casing (13), the pressing means (51; 61) being interposed between said half-casings,
- or in an open, filling position in which it allows the positioning of a sachet inside the lower half-casing (13).

13. A device according to one of claims 5 to 10 and claim 12 jointly, characterized in that the upper half-casing (14) comprises a rearward end rigidly fixed on the upper clamping jaw (16).

14. A device according to claim 13, characterized in that the upper half-casing (14) is articulated around a transverse shaft (18) carried by the upper clamping jaw (16), said half-casing being associated with resilient means (20) arranged to block a rotation urging the half-casings (13, 14) from the sachet holding position.

15. A device according to one of claims 12 to 14, characterized in that the pressing means comprise a pressing member (51) provided with a pair of upper and lower jaws (52, 53) consisting of plates articulated around an articulation shaft (54) and biased towards an open position of the pressing member by resilient means, the lower jaw (52) being rigidly fixed on the passive carriage (31) at a surface portion of said jaw adjacent to the articulation shaft (54), in such a manner that, on the one hand, said articulation shaft extends longitudinally on one of the sides of the half-casings (13, 14) and, on the other hand, the two jaws (52, 53) extend transversely between said half-casings through a longitudinal gap provided between the joining surfaces of said half-casings.

16. A device according to claims 14 and 15 jointly, characterized in that the upper jaw (53) of the pressing member (51) is surmounted by an element (57) in the form of a bevel conjugate to the tapered end of the upper half-casing (14), said upper half-casing being provided, towards its rearward end, with an inner face comprising a recess adapted to accomodate an upper portion of said bevel.

17. A device according to one of claims 15 or 16, characterized in that it comprises means for retaining the pressing member (51) in the closed position when the passive carriage (31) is in the advanced position, wherein a translation of said passive carriage is blocked, said retaining means comprising:
- a lower leg (58) rigidly fixed on the upper jaw (53), tilted towards the outside relative to a vertical plane passing through the articulation shaft (54) so as to form with said upper jaw, as seen in cross-section, a dihedron of which the articulation shaft (54) forms the apex,
- an anti-pivoting fixed element (60), constituted by a small wheel arranged so that the lower end of the leg (58) is positioned above said small wheel, in tangential engagement with said small wheel, in the advanced position of the passive carriage (31).

18. A device according to one of claims 15 to 17, characterized in that the lower jaw (52) of the pressing member (51) is fixed on the passive carriage (31) by means of spindles (56) adapted to allow the dismounting of said pressing member by means of a tractive force applied on the upper jaw (53).

19. A device according to one of claims 15 to 18, characterized in that the means for guiding the passive (31) and active (8) carriages are offset laterally relative to the vertical plane of movement of the piercing means (13, 14).

20. A device according to one of claims 12 to 14, characterized in that the pressing means comprise a pressing member (61) in the form of a shell adapted to hold a portion of the sachet pressed between said member and the upper half-casing (14) in the closed position of the half-casings, said pressing member being carried on a plate (62) extending across a longitudinal slot (63) in the lower casing (13) and rigidly fixed on the passive carriage (31).

21. A device according to one of claims 1 to 11, characterized in that the means for holding sachets inside the lower half-casing (13) form an integral part of said sachets and consist of an external hem (64) formed at a short distance from the forward end portion of said sachets, said hem forming a pocket adapted to cover the forward end of the lower half-casing (13) when a sachet is positioned inside said lower half-casing.

22. A device according to claim 21, characterized in that each sachet comprises a forward end portion having an external surface adapted to adhere to said sachet when in a folded position on the latter, after said end portion is opened.

23. A device according to one of claims 21 or 22, characterized in that the pressing means comprise a pressing member (51) provided with a pair of lower and upper jaws (52, 53) consisting of plates articulated around an articulation shaft (54) and biased towards an open position of the clamp (51) by resilient means, the lower jaw (52) being rigidly fixed on the passive carriage (31) at a portion of the surface of said jaw adjacent to the articulation shaft (54), in such a manner that, on the one hand, said articulation shaft extends longitudinally on one side of the lower half-casing (13) and, on the other hand, the two jaws (52, 53) extend transversely above said lower half-casing.

## Patentansprüche

1. Vorrichtung zur Herstellung von Sandwichs mit einem Belag, der in einer flexiblen, länglichen Tüte eingeschlossen ist, dadurch gekennzeichnet, daß die Vorrichtung die folgenden Elemente kombiniert umfaßt:
- Mittel (6) zum Halten eines zu belegenden Brotstücks, welche so angepaßt sind, daß sie das Brotstück zumindest teilweise umschließen,
- Mittel zur axialen Einstechung des Brotstücks, die in der Verlängerung der Haltermittel (6) angeordnet sind, die:
. zumindest eine untere Halbschale (13) in Form einer Rinne, die eine geringere Länge als die Länge der flexiblen Tüten aufweist, wobei die untere Halbschale (13) so angepaßt ist, daß die Endstücke dieser Tüten über die entsprechenden sogennanten hinteren und vorderen Enden der Halbschale (13) hinausragen, wobei die Kalbschale ein sich verjüngendes, vorderes Ende aufweist,
. Mittel (14; 64) zum Halten einer Tüte im Innern der unteren Halbschale (13), welche die Ausgabe des in der Tüte enthaltenen Belags nach dem Öffnen des vorderen Endstücks der Tüte ermöglichen,
- Mittel zum Verschieben der Einstechmittel (13, 14; 13, 64), die einen Wagen (8) umfassen, der fest mit dem rückwärtigen Ende der unteren Halbschale (13) verbunden ist und der Mittel (15, 16) zur Befestigung des hinteren Endstücks einer Tüte aufweist, wobei der Wagen auf Führungsmitteln (9) montiert ist, die die Verschiebung ermöglichen zwischen der Rückzugsposition, in welcher die untere Halbschale (13) außerhalb der Haltemittel (6) des Brotstücks verläuft, und der Vorschubposition, in welcher die Halbschale auf den größten Teil seiner Länge ins Innere der Haltemittel eindringt,
- Mittel zum Auszug des Belags, das in einer in der unteren Halbschale (13) befindlichen Tüte umschlossen ist, nachdem das vordere Endstück der Tüte geöffnet wurde, wobei diese Auszugsmittel Folgendes umfassen:
. Greifmittel (51; 61), die so angeordnet sind, daß sie etwas bis über die untere Halbschale (13) reichen, und die so angepaßt sind, daß sie ein Zwischenstück der in der Halbschale befindlichen Tüte im Griff halten,
. Mittel (31) zum Verschieben der Greifmittel (51; 61), die einen sogenannten passiven Wagen (31) umfassen, der auf den Führungsmitteln (9) des aktiven Wagens (8) montiert ist und so angepaßt ist, daß er in Anschlagsposition gegen den in Rückzugsposition befindlichen aktiven Wagen gebracht werden kann, damit ein in der Nähe des Endstücks liegender Abschnitt der Tüte im Griff gehalten und beim Verschieben des aktiven Wagens (8) in Vorschubsposition von diesem aktiven Wagen mitgenommen wird,
. Mittel (35, 38) zur Sperre der Bewegung des passiven Wagens (31) bei der Vorschubsposition des aktiven Wagens (8), wobei diese Mittel den passiven Wagen in der Nähe der Brothaltemittel (6) zurückhalten bei der Rückführung des aktiven Wagens in die Rückzugsposition.

2. Vorrichtung gemäß Anspruch 1, dadurch gekennzeichnet, daß die Vorrichtung Mittel (41, 47, 48, 50) zur Auslösung der Sperrmittel (35, 38) des passiven Wagens (31) enthält, welche von dem aktiven Wagen (8) betätigbar sind, wenn dieser Wagen in seine Rückzugsposition zurückgeführt wird, sowie Rückführungsmittel (34) umfaßt, die mit dem passiven Wagen verbunden und so angepaßt sind, daß sie die Rückführung des passiven Wagens zu dem in Rückzugsposition befindlichen aktiven Wagen (8) ausführen können.

3. Vorrichtung gemäß Anspruch 2, dadurch gekennzeichnet, daß :
- die Sperrmittel eine Raste (35) umfassen, die um eine feste Achse (36) drehbar angebracht und so angeordnet ist, daß die Raste in eine Einrastungslasche (38) am passiven Wagen (31) einrastet, sowie elastische Mittel (40), die mit der Raste (35) verbunden sind und die so angepaßt sind, daß sie die Raste in der Rastposition vorspannen,
- die Auslösemittel einen Längsstift (41) umfassen, der frei längsbewegbar montiert und mit zwei Anschlagsorganen (47, 48) - einem sogenannten hinteren und einem sogenannten vorderen - versehen ist, die so angeordnet sind, daß sie beim Verschieben des aktiven Wagens (8) in Vorschubs- bzw. Rückzugsposition von diesem Wagen vorgespannt werden, um eine entsprechende Längsbewegung des Stifts (41) über einen vorbestimmten Abstand auszulösen, wobei der Stift ein vorderes Ende umfaßt, das ein Auslöseteil (50) aufweist, welches die Raste (35) am Ende der Rückbewegung dieses Stifts freigibt.

4. Vorrichtung gemäß Anspruch 3, dadurch gekennzeichnet, daß die Führungsmittel des aktiven (8) und passiven Wagens (31) zwei längsseitige Führungsstifte (9) umfassen, die parallel zu dem Auslösestift (41) verlaufen, wobei die Führungsstifte und der Auslösestift durch Lager (11, 33, 45) verlaufen, die an dem aktiven und an dem passiven Wagen angebracht sind.

5. Vorrichtung gemäß einem der Ansprüche 1 bis 4, dadurch gekennzeichnet, daß die Befestigungsmittel des hinteren Endstücks der Tüten zwei Klemmbacken (15, 16) - eine sogenannte untere und eine sogenannte obere - aufweisen, welche Sperrmittel (25-30) umfassen, die so angepaßt sind, daß sie die Klemmbacken in zusammengeklemmter Position zusammenhalten können, in der sie gemeinsam das Tüten-Ende greifen, wobei die untere Klemmbacke (15) fest mit dem aktiven Wagen (8) verbunden ist, so daß sie in der Verlängerung der unteren Halbschale (13) verläuft.

6. Vorrichtung gemäß Anspruch 5, dadurch gekennzeichnet, daß die beiden Klemmbacken (15, 16) um eine Längsachse (17) drehbar angebracht und mit Sperrmitteln (25-30) verbunden sind, mit denen sie in zusammengeklemmter Position gehalten werden können.

7. Vorrichtung gemäß Anspruch 6, dadurch gekennzeichnet, daß die obere Klemmbacke (16) einen Betätigungsgriff (23) aufweist, der die manuelle Verschiebung des aktiven Wagens (8) ermöglicht.

8. Vorrichtung gemäß Anspruch 7, dadurch gekennzeichnet, daß sie Rückführungsmittel (12) aufweist, die mit dem aktiven Wagen (8) verbunden sind und die Rückführung dieses Wagens in Rückzugsposition ermöglichen.

9. Vorrichtung gemäß einem der Ansprüche 5 bis 8, dadurch gekennzeichnet, daß die beiden Klemmbacken (15, 16) Klemmflächen umfassen, die eine Aufeinanderfolge von Rillen und Rippen (24) aufweisen, welche so angepaßt sind, daß sie in Klemmposition lückenlos ineinandergreifen.

10. Vorrichtung gemäß einem der Ansprüche 6 bis 8, dadurch gekennzeichnet, daß die untere Klemmbacke (15) mit Scharnierstiften (22), die das Abmontieren der Klemmbacken durch Zug an der oberen Klemmbacke (16) ermöglichen, an dem aktiven Wagen (8) befestigt ist.

11. Vorrichtung gemäß einem der vorhergehenden Ansprüche, dadurch gekennzeichnet, daß die Brothaltemittel aus einer Halbschale (6) in Form einer Rinne bestehen, die das Brotstück aufnehmen kann, wobei die Rinne durch eine senkrechte konkave Endwand (6a) auf Höhe des den Einstichmitteln (13, 14; 13, 64) gegenüberliegenden Endes verschlossen ist.

12. Vorrichtung gemäß einem der vorhergehenden Ansprüche, dadurch gekennzeichnet, daß die Mittel zum Halten der Tüten im Innern der unteren Halbschale (13) eine zweite, sogenannte obere Halbschale (14) in der Form passend zu der unteren Halbschale umfassen, wobei die obere Halbschale:
- entweder in geschlossener Position zum Halten der Tüte, wobei sie über die untere Halbschale (13) reicht und die Greifmittel (51; 61) zwischen den beiden Halbschalen eingefügt sind,
- oder in offener Position zum Füllen, wobei sie das Anbringen einer Tüte im Innern der unteren Halbschale (13) ermöglicht,
angeordnet werden kann.

13. Vorrichtung gemäß einem der Ansprüche 5 bis 10 gemeinsam mit Anspruch 12, dadurch gekennzeichnet, daß die obere Halbschale (14) ein hinteres Endstück umfaßt, das fest mit der oberen Klemmbacke (16) verbunden ist.

14. Vorrichtung gemäß Anspruch 13, dadurch gekennzeichnet, daß die obere Halbschale (14) um eine Querachse (18) drehbar angebracht ist, die von der oberen Klemmbacke (16) getragen wird, wobei die Halbschale mit elastischen Mitteln (20) verbunden ist, die so angeordnet sind, daß sie einer die beiden Halbschalen (13, 14) trennenden Rotationsbewegung in der Tütenhalteposition entgegenwirken.

15. Vorrichtung gemäß einem der Ansprüche 12 bis 14, dadurch gekennzeichnet, daß die Greifmittel eine Zange (51) umfassen, die zwei Spannbacken (52, 53) - eine untere und eine obere - aufweist, welche aus gelenkig um eine Gelenkachse (54) angebrachten Halteplatten bestehen und mit elastischen Mitteln in eine Zangenöffnungsposition vorgespannt werden, wobei die untere Spannbacke (52) so mit einem im Bereich der Gelenkachse (54) anliegenden Teil der Spannbackenoberfläche fest mit dem passiven Wagen (31) verbunden ist, daß einerseits die Gelenkachse entlang einer der Seiten der Halbschalen (13, 14) verläuft und andererseits die beiden Spannbacken (52, 53) quer zwischen den Halbschalen durch einen Längsraum verlaufen, der zwischen den Verbindungsflächen der beiden Halbschalen vorgesehen ist.

16. Vorrichtung gemäß Anspruch 14 und 15 gemeinsam, dadurch gekennzeichnet, daß auf der oberen Spannbacke (53) der Zange (51) ein Teil (57) in Form einer Ecke montiert ist, welches mit dem verjüngten Ende der oberen Halbschale (14) verbunden ist, wobei die obere Halbschale in der Richting ihres hinteren Endes mit einer Innenfläche versehen ist, die eine Aussparung aufweist, welche einen oberen Teil der Ecke aufnehmen kann.

17. Vorrichtung gemäß einem der Ansprüche 15 oder 16, dadurch gekennzeichnet, daß sie Mittel umfaßt zum Geschlossenhalten der Zange (51) in der Vorschubsposition des passiven Wagens (31), in welcher dieser Wagen in der Bewegung gesperrt ist, wobei diese Haltemittel Folgendes umfassen:
- eine untere Strebe (58), die fest mit der oberen Spannbacke (53) verbunden und nach außen im Bezug zu einer senkrechten Ebene geneigt ist, die durch die Gelenkachse (54) verläuft, so daß die Strebe mit der oberen Spannbacke - im Schnitt gesehen - ein Dieder bildet, dessen Scheitel die Gelenkachse (54) ist,
- ein festes Drehschutzteil (60), das aus einem kleinen Rad besteht, welches so angeordnet ist, daß das untere Ende der Strebe (58) über das kleine Rad und tangent zu ihm in der Vorschubsposition des passiven Wagens (31) positioniert wird.

18. Vorrichtung gemäß einem der Ansprüche 15 bis 17, dadurch gekennzeichnet, daß die untere Spannbacke (52) der Zange (51) mit Scharnierstiften (56), die das Abmontieren der Zange durch Zug an der oberen Spannbacke (53) ermöglichen, an dem passiven Wagen (31) befestigt ist.

19. Vorrichtung gemäß einem der Ansprüche 15 bis 18, dadurch gekennzeichnet, daß die Führungsmittel des passiven (31) und aktiven Wagens (8) seitlich zur senkrechten Verschiebungsebene der Einstichmittel (13, 14) versetzt sind.

20. Vorrichtung gemäß einem der Ansprüche 12 bis 14, dadurch gekennzeichnet, daß die Greifmittel ein Greifteil (61) in Form einer Granate umfassen, welches ein Stück Tüte, das zwischen diesem Teil und der oberen Halbschale (14) geklemmt ist, in geschlossener Position der Halbschalen halten kann, wobei dieses Greifteil von einer Halteplatte (62) getragen wird, die durch einen in der unteren Halbschale (13) befindlichen Längsschlitz (63) verläuft und fest mit dem passiven Wagen (31) fest verbunden ist.

21. Vorrichtung gemäß einem der Ansprüche 1 bis 11, dadurch gekennzeichnet, daß die Mittel zum Halten der Tüten im Innern der unteren Halbschale (13) integrierender Bestandteil dieser Tüten sind und aus einem Außensaum (64) bestehen, der sich in geringem Abstand zum vorderen Ende dieser Tüten befindet, wobei der Saum eine Tasche bildet, die das vordere Ende der unteren Halbschale (13) überdeckt, wenn eine Tüte im Innern dieser Halbschale eingefügt ist.

22. Vorrichtung gemäß Anspruch 21, dadurch gekennzeichnet, daß jede Tüte ein vorderes Endstück umfaßt, das eine Außenfläche aufweist, die beim Umschlagen auf die Tüte an dieser Tüte haftet, nachdem dieses Endstück geöffnet worden ist.

23. Vorrichtung gemäß einem der Ansprüche 21 oder 22, dadurch gekennzeichnet, daß die Greifmittel eine Zange (51) umfassen, die mit zwei Spannbacken (52, 53) - einer unteren und einer oberen - versehen ist, die aus um eine Gelenkachse (54) drehbar angebrachten Halteplatten bestehen und mit elastischen Mitteln in Richtung einer offenen Position der Zange (51) vorgespannt werden, wobei die untere Spannbacke (52) fest mit einem im Bereich der Gelenkachse (54) anliegenden Teil der Spannbackenfläche so mit dem passiven Wagen (31) verbunden ist, daß einerseits ein Teil dieser Gelenkachse entlang einer der Seiten der unteren Halbschale (13) verläuft und andererseits die beiden Spannbacken (52, 53) quer über der unteren Halbschale verlaufen.
